# EUROPEAN PATENT SPECIFICATION

(11) **EP 3 081 659 B1**
(45) Date of publication and mention of the grant of the patent: **05.12.2018**
(21) Application number: 15740184.5
(22) Date of filing: 23.01.2015
(51) Int. Cl.: C22B 59/00, C22B 7/00, C22B 9/02, C22C 21/00, C22B 21/00

(54) **SCANDIUM CONCENTRATE RECOVERY METHOD**
VERFAHREN ZUR WIEDERGEWINNUNG VON SCANDIUMKONZENTRAT
PROCÉDÉ DE RÉCUPÉRATION DE SCANDIUM CONCENTRÉ

(30) Priority: 27.01.2014 JP 2014012664
(43) Date of publication of application: 19.10.2016
(73) Proprietor: Sumitomo Metal Mining Co., Ltd., Tokyo 105-8716 (JP)
(72) Inventor: TAKAHASHI, Jun-ichi, Niihama-shi, Ehime 792-0002 (JP)
(74) Representative: Jones, Nicholas Andrew
(86) International application number: PCT/JP2015/051825
(87) International publication number: WO 2015/111695

(56) References cited:
- EP-A2- 2 038 440
- JP-A- H05 171 304
- JP-A- 2003 171 724
- JP-A- 2003 171 724
- JP-A- 2007 254 822
- JP-B1- 5 445 725
- NORMAN A F ET AL: "THE EFFECT OF SCANDIUM ON THE SOLIDIFICATION BEHAVIOUR OF ALUMINIUM ALLOYS", ALUMINUM ALLOYS: THEIR PHYSICAL AND MECHANICAL PROPERTIES,PAPERS PRESENTED AT THE INTERNATIONAL CONFERENCE, XX, XX, vol. 1, 5 July 1998 (1998-07-05), pages 219-224, XP001118957,

## Description

### TECHNICAL FIELD

The present invention relates to a scandium concentrate recovery method, and in more detail, relates to a method of recovering scandium concentrate from a molten alloy containing scandium and aluminum.

### BACKGROUND ART

Aluminum scandium alloys containing aluminum and scandium (hereinafter also referred to as "Al-Sc alloy") have a characteristic of being light weight and high strength, and in addition to sports articles, have been used in fields requiring shock resistance. Additionally, in the future, applications as a structural material for aircraft, electric vehicles, high-speed rail, etc. are also expected. However, since the production volume of scandium is very small, scandium is extremely high cost. For this reason, it is not easy to broadly apply scandium industrially.

In recent years, the technology for recovering scandium that accompanies nickel oxide ore in a very small amount has progressed, and it is becoming possible to stably obtain larger amounts of scandium than before. However, to recover scandium from nickel oxide ore, since multiple processes such as ion exchange, solvent extraction, neutral precipitation and calcination are required, the matter of scandium being high cost does not change even if using this technology.

However, since scandium is easily oxidized but has a high melting point, it is not possible to obtain Al-Sc alloy by simply melting scandium and aluminum. Therefore, generally a technique has been adopted to add, to molten aluminum, scandium oxide while reducing with metals such as calcium to obtain a master alloy having a scandium quality on the order of 1-2%, and then diluting this with aluminum to obtain the intended Al-Sc alloy. In addition, it has also been proposed to produce a scandium master alloy with halogenated scandium as the raw material (refer to Patent Document 1).

Patent Document 1: Japanese Unexamined Patent Application, Publication No. 2003-171724

EP 2 038 440 relates to a process for producing an aluminium-containing remelt block, which is designed for making aluminum alloys for the aircraft industry. Norman, A.F. *et al* have reported research into the physical and mechanical effects of scandium on the solidification behavior of aluminium alloys (Aluminum Alloys: Their Physical and Mechanical Properties, Proceedings of ICAA-6, 1998, vol. 1, 219-224).

### DISCLOSURE OF THE INVENTION

### Problems to be Solved by the Invention

By performing processing in the reverse direction to the processing described in Patent Document 1, it has been considered to separate scandium from Al-Sc alloy. However, in addition to the stability of halogenated scandium, when considering the risks from using hazardous chlorine, and further the industrial facilities and cost, it is not easy to practically realize scandium recovery technology by performing processing in the reverse direction to the processing described in Patent Document 1.

On the other hand, since the expectations for scandium are rising, in the future, the production volume of Al-Sc alloy will increase, and eventually, the disposal of structures made using Al-Sc alloy, and defective articles produced in the manufacturing process of these structures, etc. are also expected to increase.

The scandium quality of these disposed articles, etc. is far higher than the scandium quality of nickel oxide ores, etc., and recovering scandium from the disposed articles, etc. and reusing is expected to be an effective means. However, even if considering the scandium quality of disposed articles, etc. to be high, an element contained in Al-Sc alloy is aluminum, and the content of scandium is a very small amount comparing with the content of aluminum; therefore, it is not possible to effectively recover scandium concentrate by simply melting Al-Sc alloy.

The present invention has been made in order to solve the above such problems, and the object thereof is to effectively recover scandium concentrate from Al-Sc alloy. When explained in further detail, the Al-Sc alloy in structures, etc. is widely used by concentrating to 0.1 to 1% Sc. As mentioned above, the Sc concentration of the Al-Sc master alloy is 1 to 2%. The present invention has an object of efficiently recovering scandium concentration of a degree that can be used as is as an Al-Sc master alloy from scrap articles of Al-Sc alloy having an Sc concentration on the order of 0.1 to 1%.

As a result of accumulating intensive research to solve the above-mentioned problems, the present inventors found that the above-mentioned object could be achieved by cooling molten alloy containing aluminum and scandium at predetermined conditions, and subsequently holding at a certain temperature for a certain time, thereby arriving at completion of the present invention.

### Means for Solving the Problems

More specifically, the present invention provides the following matters.

A first aspect of the present invention is a scandium recovery method including: a cooling step of cooling a molten alloy containing aluminum and scandium until reaching 660°C to 730°C while maintaining a cooling rate of 10°C to 100°C per minute; a holding step of holding the temperature of 660°C to 730°C for at least 60 minutes; and a recovery step of recovering a solid scandium concentrate.

In addition, according to a second aspect of the present invention, in the scandium concentrate recovery method as described in the first aspect, the recovery step is a step of dividing a melting furnace that melts the molten alloy into at least two blocks in a depth direction, and recovering a block that is a deepest portion.

Furthermore, according to a third aspect of the present invention, in the scandium recovery method as described in the first or second aspect, the method performs again the cooling step, the holding step and the recovery step after melting the scandium concentrate recovered in the recovery step in the melting furnace.

### Effects of the Invention

According to the present invention, it is possible to effectively recover a scandium concentrate from Al-Sc alloy. This scandium concentrate can be used as is as a high-quality Al-Sc master alloy. In addition, by passing through solvent extraction, etc., it is also possible to recover scandium very efficiently compared to a case of recovering from nickel oxide ore.

### BRIEF DESCRIPTION OF THE DRAWINGS

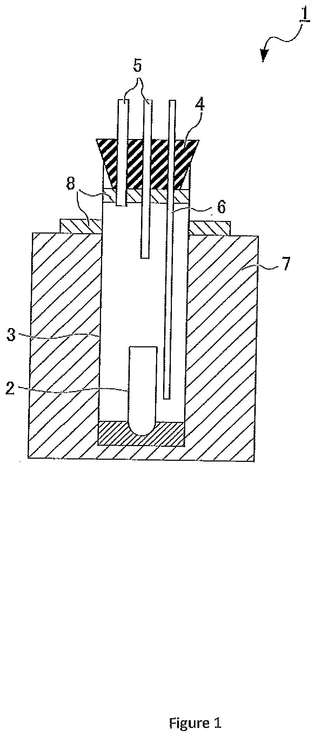

FIG. 1 is a schematic view showing an example of a melting furnace 1.

### PREFERRED MODE FOR CARRYING OUT THE INVENTION

Hereinafter, a specific embodiment of the present invention will be explained in detail; however, the present invention is not to be limited in any way to the following embodiment, and can be realized by applying appropriate modifications within the scope of the object of the present invention and the appended claims. It should be noted that places where explanation would be redundant, the explanation may be omitted as appropriate.

### <Scandium Concentrate Recovery Method>

The scandium concentrate recovery method of the present invention includes a cooling step of cooling an aluminum scandium molten alloy (hereinafter also referred to as "Al-Sc molten alloy") to be 660°C to 730°C while maintaining the cooling rate of 10°C to 100°C per minute; a holding step of holding this predetermined temperature for at least 60 minutes; and a recovery step of recovering a solid scandium concentrate.

### (Cooling Step)

The melt temperature of Al-Sc alloy is not particularly limited so long as being a temperature able to sufficiently melt the Al-Sc alloy. For example, in the case of the Sc quality contained in the Al-Sc alloy being 1%, it is possible to sufficiently melt the Al-Sc alloy if at least 800°C.

The cooling rate is 10°C to 100°C per minute. This cooling rate is preferably 20°C to 50°C per minute, and more preferably 20°C to 30°C per minute. If the cooling rate is faster than 100°C per minute, since the scandium concentrate will finely disperse in the entirety of the Al-Sc alloy, it is not preferable in the point of a sufficient concentrating effect not being obtained. If the cooling rate is slower than 10°C per minute, for example, it is not preferable because, even if substituting the inside of the melting furnace with inert gas such as argon and nitrogen and cooling, there is a possibility of reacting with the slight amount of oxygen remaining inside of the melting furnace, and not being able to sufficiently prevent oxidation of scandium during cooling. In addition, it is not preferable in the point of the energy cost for temperature maintenance being great.

In particular, by making the cooling rate faster than 20°C per minute, it is more preferable because, even in an atmosphere of air, it is possible to prevent scandium from oxidizing during cooling, and obtain a high-quality scandium concentrate.

As an example, a case of recycling Al-Sc alloy scrap having a Sc quality of 1% will be explained. If cooling the Al-Sc molten alloy at the above-mentioned cooling rate, an intermetallic compound AbSc will form that is solid in the Al-Sc molten alloy at about 730°C, which is the liquidus temperature.

Continuing, when cooling at the above-mentioned cooling rate, the Sc concentration in the Al-Sc molten alloy will decline following the liquidus composition, and Al₃Sc of an amount matching this will form. The temperature is gradually made to decline in this way. The eutectic temperature of Al-Sc molten alloy is about 660°C, and the Sc concentration of the eutectic composition is 0.2 to 0.4%; therefore, by causing the temperature to decline to approach the eutectic temperature, it is possible to lower the Sc concentration of the Al-Sc molten alloy, as well as being able to raise the concentration of scandium concentrate precipitating by the specific gravity difference.

The target temperature for cooling is 660°C to 730°C and preferably 665°C to 690°C. If the target temperature is higher than 700°C, it is not preferable because the generated amount of Al₃Sc will decrease, and scandium concentrate will not be satisfactorily recovered. If the target temperature falls below 660°C, it is not preferable because a solid of Al will form, and will not be able to mix with Al₃Sc due to the temperature becoming lower than the melting point of aluminum. In particular, if the target temperature of cooling is at least 665°C, it is preferable in the point of suppressing a solid of Al from forming.

### (Holding Step)

The holding step is a step of keeping the above-mentioned target temperature of cooling for a certain time. The holding time is decided by the size and shape of the melting furnace, and is at least 60 minutes, preferably at least 90 minutes, and more preferably at least 120 minutes. On the other hand, the holding time is not necessary better if longer. Even if assuming a holding time of at least 180 minutes, the yield will not necessarily improve remarkably compared to a case of the holding time being 60 minutes.

When exemplifying the case of recycling Al-Sc alloy scrap having Sc quality of 1%, by holding at 670°C for 120 minutes, it is possible to lower the Sc concentration of the Al-Sc molten alloy to about 0.4%, which is the eutectic composition, a result of which Al₃Sc can be sufficiently obtained. The Sc concentration contained by this Al₃Sc is about 35%.

### (Recovery Step)

The recovery step is a step of cooling the temperature of the melting furnace to room temperature after the holding step, and recovering the solid scandium concentration containing AbSc from the melting furnace.

Since solid Al₃Sc precipitates in the solution, the top part of the molten Al, i.e. aluminum concentrate, is removed by tilting or the like, to recover the solid that is the bottom part, i.e. scandium concentrate, whereby it is possible to obtain a master alloy raw material having high Sc concentration. In practice, perfect separation of the solid Al₃Sc and molten Al is difficult, and is recovered in a state in which a mixed slurry has solidified; therefore, it becomes 2 to 23% in Sc concentration.

In order to efficiently perform separation, although the entirety may be solidified, retrieved and cut; however, it is not practical due to incurring energy cost, and thus it is more preferable to separate in the molten state. For this reason, it is preferable to use a tilt furnace as the industrial melting furnace.

The melting furnace is rotated during cooling so as to further precipitate so that the furnace bottom side faces the outside, and the collecting of scandium at the furnace bottom side may be performed by centrifugal force.

In addition, a solid block that can be obtained after cooling is divided into at least two in the depth direction of the furnace, and scandium can be easily recovered so long as recovering the deepest portions of the block as scandium concentrate. The number of blocks is not particularly limited; however, it is more preferably at least 5, and even more preferably at least 10.

Furthermore, it is possible to collect aluminum mixed in the scandium concentrate at the top part of the melt by loading the block of scandium concentrate retrieved from the above-mentioned melting furnace into the melting furnace again, and repeating the above-mentioned cooling step, holding step and recovery step, and by simply this, it is possible to improve the scandium quality of the scandium concentrate.

The scandium concentrate of the present invention may be reused as is as a high-quality Al-Sc master alloy, or may be reused after remelting and making into a master alloy. In addition, by recovering scandium from a scandium concentrate by a known method such as solvent extraction, it is possible to very efficiently recover scandium compared to a case of recovering from nickel oxide ore.

### EXAMPLES

Hereinafter, the present invention will be explained in further detail by way of examples; however, the present invention is not to be subjected to any limitations in these descriptions.

**[Table 1]**

| | Cooling rate |
|---|---|
| Example | Per minute 20-30°C |
| Comparative Example 1 | Per minute 110-120°C |
| Comparative Example 2 | Per minute 5-8°C |

### <Example>

FIG. 1 is a schematic view illustrating the configuration of the melting furnace 1 used in the present example. The melting furnace 1 includes: a Tammann tube 2 made of alumina that encloses the Al-Sc alloy, a quartz furnace core tube 3 that encloses this alumina Tammann tube 2, a rubber stopper 4 that seals this quartz furnace core tube 3, an argon gas substitution unit 5 that substitutes the inside of the quartz furnace core tube 3 with argon gas through two tube insertion parts (not illustrated) provided in this rubber stopper 4, a thermocouple 6 inserted inside of the quartz furnace core tube 3 through a thermocouple insertion part (not illustrated) provided in the rubber stopper 4, an electric furnace 7 that keeps the temperature inside of the quartz tube 3 at a predetermined temperature from around the quartz furnace core tube 3, and an insulation board 8 that keeps the adiabaticity of the inside of the quartz furnace core tube 3.

Into the 99.5% pure alumina Tammann tube 2, 50 g of Al-Sc alloy having an Sc concentration of 1% was placed, and this Tammann tube 2 was set inside of the electric furnace 1 that could adjust the atmosphere using the quartz furnace core tube 3. Since the internal atmosphere of the quartz furnace core tube 3 is kept inert, after sufficiently substituting the air with argon through the argon gas substitution part 5, it was heated to 800°C and maintained, then held for 60 minutes under an argon gas flow.

Subsequently, the electric current value flowing through the electric furnace 1 was controlled so as to cause the temperature to decline maintaining a rate of 20 to 30°C per minute, and the temperature was held for 120 minutes at the point at which the temperature reached 670°C. Subsequently, the power source of the electric furnace 1 was shut off, and the sample was cooled inside of the electric furnace 1. After the sample reached room temperature, the solidified sample was retrieved.

Thereafter, the alumina Tammann tube 2 was split, and a slag portion thinly adhering to the metal sample surface obtained was stripped off with hammering, followed by cutting at a part corresponding to a volume equivalent to about 10% from the sample bottom using a diamond cutter. The composition of the bottom block obtained by this cutting was analyzed using an X-ray fluorescence spectrometer. The results are shown in Table 2.

### <Comparative Example 1>

Except for the cooling rate being 110∼120°C/min, the bottom block was obtained by the same method as the Example. The composition of this bottom block was analyzed using an X-ray fluorescence spectrometer. The results are shown in Table 2.

### <Comparative Example 2>

Except for the cooling rate being 5∼8°C/min, the bottom block was obtained by the same method as the Example. The composition of this bottom block was analyzed using an X-ray fluorescence spectrometer. The results are shown in Table 2.

**[Table 2]**

| | Sc rate |
|---|---|
| Example 1 | 7% |
| Comparative Example 1 | 1.2% |
| Comparative Example 2 | 7.5-8% (Note that scandium at surface oxidized) |

The Sc concentration of the bottom block according to the Example was 7%. Based on this, it was confirmed that the scandium concentrate obtained through the cooling step of cooling the molten alloy containing aluminum and scandium until becoming 660°C to 730°C while maintaining the cooling rate at 10°C to 100°C per minute, the holding step of keeping this cooling temperature for a certain time, and the recovery step of recovering a solid scandium concentrate could be reused as is as a high-qualityAl-Sc master alloy. In addition, by performing solvent extraction, etc. on this scandium concentrate, it is possible to recover scandium very efficiently compared to a case of recovering from nickel oxide ore.

On the other hand, when the cooling rate was too fast, the scandium concentration lowered to 1.2%, and could not be reused as is as a high-quality Al-Sc master alloy (Comparative Example 1). It was lower than the Example. In addition, when observing the sample cross-section by an electron beam microanalyzer (EPMA), the appearance of fine scandium contents being dispersed over the entire surface was seen also in the Al-Sc alloy phase, and the weight itself that could be retrieved as scandium concentrate was lower than the weight of the Example.

In addition, even when the cooling rate was too slow, the scandium concentration of the bottom block was not greatly different from the concentration of the Example (Comparative Example 2). In addition, irrespective of substituting inside of the melting furnace with argon and cooling, the remaining scandium in the vicinity of the surface became an oxide. For this reason, in the case of the cooling rate being too slow, it was confirmed that the scandium concentrate cannot be reused as is as a high-quality Al-Sc master alloy. Oxidation of the bottom block is assumed to be caused by reacting with the slight amount of oxygen remaining inside of the melting furnace.

### EXPLANATION OF REFERENCE NUMERALS

- 1: melting furnace
- 2: alumina Tammann tube
- 3: quartz furnace core tube
- 4: rubber stopper
- 5: argon gas substitution unit
- 6: thermocouple
- 7: electric furnace
- 8: insulation board

## Claims

1. A scandium concentrate recovery method comprising:
a cooling step of cooling a molten alloy containing aluminum and scandium until reaching 660°C to 730°C while maintaining a cooling rate of 10°C to 100°C per minute;
a holding step of holding the temperature of 660°C to 730°C for at least 60 minutes; and
a recovery step of recovering a solid scandium concentrate.

2. The scandium concentrate recovery method according to claim 1, wherein the recovery step is a step of dividing a melting furnace that melts the molten alloy into at least two blocks in a depth direction, and recovering a block that is a deepest portion.

3. The scandium concentrate recovery method according to claim 1 or 2, wherein the method performs again the cooling step, the holding step and the recovery step after melting the scandium concentrate recovered in the recovery step in the melting furnace.

## Patentansprüche

1. Verfahren zur Gewinnung von Scandiumkonzentrat, umfassend:
einen Abkühlschritt zum Abkühlen einer geschmolzenen Legierung, die Aluminium und Scandium enthält, bis eine Temperatur von 660°C bis 730°C erreicht ist, während eine Abkühlrate von 10°C bis 100°C pro Minute eingehalten wird,
einen Verweilschritt zum Halten der Temperatur von 660°C bis 730°C über mindestens 60 Minuten, und
einen Gewinnungsschritt zum Gewinnen eines festen Scandiumkonzentrats.

2. Verfahren zur Gewinnung von Scandiumkonzentrat nach Anspruch 1, wobei der Gewinnungsschritt einen Schritt zum Teilen eines Schmelzofens, der die Legierungsschmelze in mindestens zwei Blöcke in Tiefenrichtung aufschmilzt, und Gewinnen eines Blocks, der einen tiefsten Abschnitt darstellt, umfasst.

3. Verfahren zur Gewinnung von Scandiumkonzentrat nach Anspruch 1 oder 2, wobei das Verfahren den Abkühlschritt, den Verweilschritt und den Gewinnungsschritt nach Aufschmelzen des im Gewinnungsschritt gewonnenen Scandiumkonzentrats im Schmelzofen erneut durchführt.

## Revendications

1. Procédé de récupération de scandium concentré, comprenant :
une étape de refroidissement qui refroidit un alliage fondu contenant de l'aluminium et du scandium jusqu'à obtention d'une température de 660°C à 730°C, tout en maintenant une vitesse de refroidissement de 10°C à 100°C par minute ;
une étape de maintien qui maintient la température de 660°C à 730°C pendant au moins 60 minutes ; et
une étape de récupération qui récupère un concentré solide de scandium.

2. Procédé de récupération de scandium concentré selon la revendication 1, selon lequel l'étape de récupération est une étape qui divise un four de fusion qui fond l'alliage fondu en au moins deux blocs dans le sens de la profondeur, et qui récupère un bloc qui est la partie la plus profonde.

3. Procédé de récupération de scandium concentré selon la revendication 1 ou 2, ledit procédé exécutant à nouveau l'étape de refroidissement, l'étape de maintien et l'étape de récupération après la fusion du concentré de scandium récupéré lors de l'étape de récupération dans le four de fusion.
